# FASCICULE DE BREVET EUROPEEN

(11) **EP 3 551 899 B1**
(45) Date de publication et mention de la délivrance du brevet: **04.11.2020**
(21) Numéro de dépôt: 17804627.2
(22) Date de dépôt: 13.11.2017
(51) Int. Cl.: F16D 1/076, F16D 69/00

(54) **PIGNON DE TRANSMISSION DE MOUVEMENT**
RITZEL ZUR BEWEGUNGSÜBERTRAGUNG
PINION FOR TRANSMISSION OF MOVEMENT

(30) Priorité: 12.12.2016 FR 1662288
(43) Date de publication de la demande: 16.10.2019
(73) Titulaire: PSA Automobiles SA, 78300 Poissy (FR)
(72) Inventeur: FISCHER, Jeremie, 92150 Suresnes (FR)
(86) Numéro de dépôt international: PCT/FR2017/053079
(87) Numéro de publication internationale: WO 2018/109291

(56) Documents cités:
- EP-A1- 1 519 075
- FR-A- 1 286 318
- JP-A- H10 267 044
- US-A1- 2007 000 747
- US-B2- 7 472 467

## Description

La présente invention se rapporte au maintien sans mouvement relatif de deux éléments de machine par friction pour la transmission de couple.

On connait du document US7472467 un assemblage serré entre l'extrémité d'un vilebrequin, deux pignons et une poulie. Dans cet assemblage, la surface frontale d'extrémité du vilebrequin, traitée par laser structuration, présente un relief en saillie. Cette surface frontale d'extrémité du vilebrequin vient en contact avec une première face frontale, non traitée par laser structuration du premier pignon. La seconde face frontale du premier pignon, traitée par laser structuration, présente un relief en saillie et vient en contact avec une première face frontale, non traitée par laser structuration, du second pignon. Enfin, la seconde face frontale du second pignon, traitée par laser structuration, vient en contact avec une surface frontale, non traitée par laser structuration, de la poulie.

Un tel assemblage présente l'inconvénient de devoir traiter le vilebrequin ainsi que les deux poulies. Un autre inconvénient est qu'un tel traitement des poulies sur une seule face génère une diversité de pièces qui n'est pas souhaitée en production. Un autre inconvénient est qu'il faut tenir compte du sens de montage des pignons.

Par conséquent, le problème à la base de l'invention est d'obtenir un assemblage entre un vilebrequin, deux pignons ayant la capacité de transmettre du couple sans rotation des pièces entre elles, tout en limitant la diversité de pièce et de traitement des pièces et en facilitant la prise en compte du sens de montage.

Pour atteindre cet objectif, il est prévu selon l'invention un pignon de transmission d'un mouvement autour d'un axe de rotation, cet élément mécanique étant délimité latéralement par deux faces, caractérisé en ce que chacune des deux faces comprend une surface d'appui, ces surfaces d'appui comportant un même motif en relief, le motif en relief étant tel que la superposition de ce motif et de son image spéculaire, quelle que soit la position angulaire de superposition de l'image spéculaire relativement au motif, ne donne qu'un point d'intersection ou plus.

L'effet technique est d'éviter une superposition linéaire partielle ou totale des motifs qui pourrait gêner le serrage et créer un risque de de glissement en fonctionnement. Le fait que le motif soit identique sur chaque face limite la diversité de pièces et d'opération de fabrication.

Diverses caractéristiques supplémentaires peuvent être prévues, seules ou en combinaisons :
En variante, pour favoriser la tenue mécanique, le motif est disposé sur la surface d'appui au moins prêt du bord de la surface d'appui le plus éloigné radialement du centre de rotation.

En variante, pour simplifier la fabrication, le motif consiste en la répétition d'un motif élémentaire.

En variante, pour n'offrir que la possibilité d'avoir des intersections de motif, le motif élémentaire présente une forme d'arc ou d'un segment d'une droite dont le prolongement ne passe pas par l'axe de rotation.

En variante, le motif en relief est réalisé par micro usinage.

En variante, le motif en relief de préférence par micro usinage par laser.

L'invention a aussi pour objet un ensemble mécanique de transmission d'un mouvement autour d'un axe de rotation, comprenant un premier élément mécanique, un deuxième élément mécanique, un troisième et un quatrième élément juxtaposés, les deuxième et troisième éléments étant enserrés entre les premier et quatrième éléments par des moyens de serrage de sorte que chaque élément soit toujours sans mouvement relatif de rotation les uns par rapport autour de l'axe de rotation, chaque élément étant en contact avec son élément voisin par une surface de contact, caractérisé en ce que le deuxième et le troisième élément sont chacun un pignon de l'invention.

En variante, pour simplifier le montage, les deuxième et troisième éléments mécaniques sont agencés de sorte à n'avoir chacun pas de sens de montage ou sont identiques.

L'invention concerne aussi un moteur thermique comprenant un ensemble mécanique selon l'une des variantes décrites.

Selon une réalisation, le premier élément est un vilebrequin.

Selon une réalisation, le quatrième élément est une poulie.

L'invention concerne aussi un véhicule comprenant un tel moteur thermique.

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'un assemblage axial conforme à l'invention entre une extrémité de vilebrequin, deux pignons et une poulie.
- La figure 2 est une représentation schématique de deux pignons conforme à l'invention présentés en vis-à-vis.
- La figure 3 est une représentation schématique du résultat de la superposition d'un motif conforme à l'invention et de son image par un miroir.

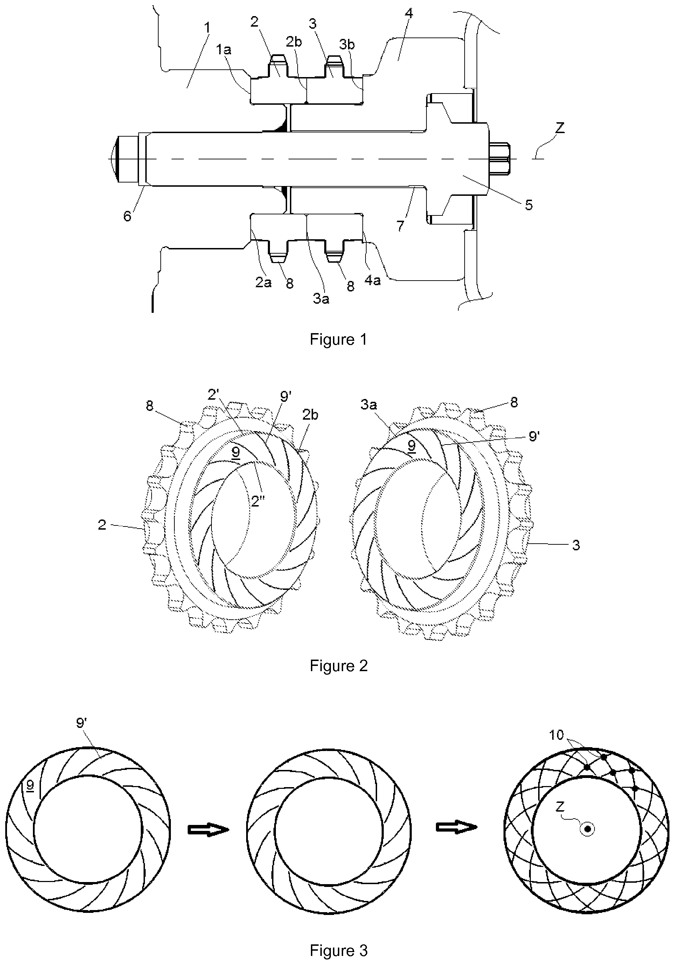

La figure 1 présente un ensemble mécanique à quatre éléments mécaniques juxtaposés serrés les uns contre les autres. Dans le mode ce réalisation, cet ensemble mécanique comprend comme premier élément mécanique un vilebrequin 1, deux pignons 2 et 3 en tant que deuxième et troisième élément mécanique et pour quatrième élément mécanique une poulie 4.

Les éléments de cet ensemble mécanique sont ici destinés à être entraînés ensemble en rotation autour d'un axe longitudinal Z, sans jamais aucun mouvement de rotation relatif de ces différents éléments les uns par rapport aux autres, autour de l'axe longitudinal Z.

Les deux pignons 2 et 3 sont enserrés entre le vilebrequin 1 et la poulie 2 par des moyens de serrage de la poulie 2 vers le vilebrequin 1, ces moyens de serrage bloquant la rotation relative de ces éléments les uns par rapport aux autres autour de l'axe longitudinal Z. Ici, les moyens de serrage se présentent sous la forme d'une vis 5 axiale montée selon l'axe longitudinal Z vissée dans un filetage 6 du vilebrequin à travers un passage 7 de la poulie 4.

Chaque pignon 2 et 3 présente une forme de roue d'axe de rotation Z, comprenant un orifice central, délimitée latéralement par deux faces et par des dents 8 sur sa périphérie circulaire. Ainsi, dans l'ensemble mécanique, le pignon 2 présente une face orientée vers le vilebrequin 1 et sa seconde face orientée vers le pignon 3 tandis que le pignon 3 présente une face orientée vers la poulie 4 et sa seconde face orientée vers le pignon 2.

Chacune des faces des pignons 2, 3 comprend une surface d'appui respectivement 2a, 2b, 3a, 3b.

Lorsque ces quatre éléments sont serrés entre eux, la surface de contact 1a du vilebrequin 1 prévu à cet effet vient au contact de la surface d'appui 2a présente sur la première face latérale du pignon 2, la surface d'appui 2b vient au contact de la surface d'appui 3a du pignon 3 et la surface d'appui 3b vient au contact d'une surface de contact 4a de la poulie prévue à cet effet.

Les pignons 2 et 3 sont bloqués en position uniquement par serrage, aussi, comme illustré sur la figure 2, afin d'améliorer la friction entre les surfaces en contact de cet ensemble mécanique, il est prévu un micro usinage sur chacune des surfaces d'appui 2a, 2b, 3a, 3b des pignons 2 et 3 d'un même motif 9 en relief sur la surface d'appui. On entend par motif l'ensemble du dessin réalisé sur la surface d'appui.

Le pignon 2 peut être un pignon pour transmettre du mouvement à un système de distribution du moteur tandis que le pignon 3 peut être un pignon pour transmettre du mouvement à une pompe à huile.

Le fait de faire un même motif simplifie la réalisation. Dans le cas d'usage, comme dans ce mode de réalisation, de deux pignons 2, 3 identiques, on s'affranchit de plus du sens de montage et on réduit la diversité de pièces.

Les deux pignons 2, 3 peuvent être différents entre eux mais de préférence chaque pignon est agencé de sorte à n'avoir pas de sens de montage. Autrement dit, le pignon 2 par exemple peut être retourné. Par exemple, les deux pignons 2, 3 peuvent être de largeur différente.

Ce motif peut être la répétition d'un motif 9' élémentaire ce qui simplifie encore la réalisation. Comme illustré par exemple sur la figure 3 le motif élémentaire 9' peut présenter la forme d'un arc. Le motif élémentaire 9' peut cependant avoir une autre forme telle que le segment d'une droite dont le prolongement ne passe pas par l'axe de rotation Z du pignon.

En revenant à la figure 2, le motif 9 est composé de motifs élémentaires 9' qui s'étendent du bord 2' le plus éloigné de l'axe de rotation Z au bord 2" le plus proche de l'axe de rotation. Pour des raisons de tenue au couple, il est prévu de que le motif 9 soit disposé sur la surface d'appui au moins prêt du bord 2' de la surface d'appui le plus éloigné radialement du centre de rotation Z.

Pour des raisons de facilité de mise en œuvre, Le micro usinage du motif 9 en relief peut être réalisé par laser (méthode encore désignée « laser structuring » en terminologie anglaise). D'autre forme de micro usinage peuvent être prévue, par exemple par faisceau d'électron. Ces micro usinages génèrent localement des légères élévations à la surface qui permettent une meilleure accroche des surface d'appui.

Afin d'éviter de perturber le serrage de l'ensemble mécanique, il est nécessaire de ne pas mettre deux surfaces et leur motif en relief en vis-à-vis et donc d'avoir deux hauteurs de relief à comprimer au serrage et un risque de glissement en fonctionnement car le reste des deux surfaces peut ne pas être en contact.

Afin d'éviter ce risque, le motif 9 est choisi tel que la superposition du motif 9 et de son image dans un miroir (image spéculaire), quelle que soit la position angulaire de superposition de l'image spéculaire relativement au motif 9, ne donne qu'un point d'intersection ou plus.

En illustration, à la figure 3, est présenté sur le schéma le plus à gauche une vue de face de la surface d'appui du pignon 2 ou 3 et de son motif 9. Le schéma central est l'image de la surface d'appui et de son motif dans un miroir. Le schéma le plus à droite présentant la superposition l'un sur l'autre des deux premiers schémas ne montre que des points 10 de croisement du motif original et de son image superposée. Il en va ainsi, quel que soit la position angulaire de superposition de l'image spéculaire relativement au motif 9, autrement si on tourne l'image superposée du motif autour de l'axe de rotation Z, on n'obtient jamais de superposition du motif original et de son image autre que des croisements.

L'invention ne se limite pas aux modes de réalisation décrits. Dans le mode de réalisation décrit précédemment, les pignons 2, 3 constituent des éléments mécaniques circulaires de transmission de mouvement autour de l'axe de rotation Z. D'autres éléments mécaniques circulaires de transmission de mouvement autour de l'axe de rotation peuvent être prévus tels que des poulies.

Un tel ensemble mécanique peut être présent dans un moteur thermique. Un tel moteur thermique peut équiper un véhicule automobile.

## Revendications

1. Pignon (2, 3) de transmission d'un mouvement autour d'un axe de rotation (Z), délimité latéralement par deux faces, **caractérisé en ce que** chacune des deux faces comprend une surface d'appui (2a, 2b, 3a, 3b), ces surfaces d'appui (2a, 2b, 3a, 3b) comportant un même motif (9) en relief, le motif (9) en relief étant tel que la superposition de ce motif (9) et de son image spéculaire, quelle que soit la position angulaire de superposition de l'image spéculaire relativement au motif (9), ne donne qu'un point d'intersection (10) ou plus.

2. Pignon selon la revendication 1, **caractérisé en ce que** le motif (9) est disposé sur la surface d'appui au moins prêt du bord (2') de la surface d'appui le plus éloigné radialement du centre de rotation (Z).

3. Pignon selon la revendication 1 ou la revendication 2, **caractérisé en ce que** le motif (9) en relief consiste en la répétition d'un motif élémentaire (9').

4. Pignon selon la revendication 3, **caractérisé en ce que** le motif élémentaire (9') présente une forme d'arc ou d'un segment d'une droite dont le prolongement ne passe pas par l'axe de rotation (Z).

5. Pignon selon l'une quelconque des revendications précédentes, **caractérisé en ce que** le motif (9) en relief est réalisé par micro usinage,

6. Pignon selon la revendication précédente, **caractérisé en ce qu'**il s'agit d'un micro usinage par laser.

7. Ensemble mécanique de transmission d'un mouvement autour d'un axe de rotation (Z), comprenant un premier élément (1) mécanique, un deuxième élément (2) mécanique, un troisième (3) et un quatrième élément (4) juxtaposés, les deuxième et troisième éléments (2, 3) étant enserrés entre les premier et quatrième éléments (1, 4) par des moyens de serrage (5) de sorte que chaque élément soit toujours sans mouvement relatif de rotation les uns par rapport autour de l'axe de rotation (Z), chaque élément étant en contact avec son élément voisin par une surface de contact (1a, 2a, 2b, 3a, 3b, 4a), **caractérisé en ce que** le deuxième et le troisième élément (2, 3) sont chacun un pignon selon l'une des revendications 1 à 6.

8. Ensemble mécanique selon la revendication précédente, **caractérisé en ce que** les deuxième et troisième éléments mécaniques (2, 3) sont agencés de sorte à n'avoir chacun pas de sens de montage ou sont identiques.

9. Moteur thermique, **caractérisé en ce qu'**il comprend un ensemble mécanique selon la revendication 7 ou la revendication 8.

10. Moteur thermique selon la revendication 9, **caractérisé en ce que** le premier élément est un vilebrequin.

11. Moteur thermique selon la revendication 9 ou la revendication 10, **caractérisé en ce que** le quatrième élément est une poulie.

12. Véhicule, **caractérisé en ce qu'**il comprend un moteur thermique selon l'une des revendications 9 à 11.

## Patentansprüche

1. Ritzel (2, 3) zur Übertragung der Bewegung um eine Drehachse (Z), die seitlich durch zwei Flächen begrenzt ist und **dadurch gekennzeichnet ist, dass** jede der beiden Flächen eine Auflagefläche (2a, 2b, 3a, In 3b) umfassen diese Lagerflächen (2a, 2b, 3a, 3b) das gleiche Reliefmuster (9), wobei das Reliefmuster (9) derart ist, dass die Überlagerung dieses Musters (9) und sein Spiegelbild Unabhängig von der Winkelposition der Überlagerung des Spiegelbildes relativ zum Muster (9) ergibt sich nur ein Schnittpunkt (10) oder mehr.

2. Ritzel nach Anspruch 1, **dadurch gekennzeichnet, dass** das Muster (9) auf der Auflagefläche mindestens nahe der Kante (2') der Auflagefläche angeordnet ist, die radial vom Rotationszentrum (Z) am weitesten entfernt ist.

3. Ritzel nach Anspruch 1 oder Anspruch 2, **dadurch gekennzeichnet, dass** das Reliefmuster (9) aus der Wiederholung eines Elementarmusters (9') besteht.

4. Ritzel nach Anspruch 3, **dadurch gekennzeichnet, dass** das Elementarmuster (9') die Form eines Bogens oder eines Segments einer geraden Linie hat, dessen Ausdehnung nicht durch die Drehachse (Z) verläuft.

5. Ritzel nach einem der vorhergehenden Ansprüche, **dadurch gekennzeichnet, dass** das Reliefmuster (9) durch Mikrobearbeitung erzeugt wird,

6. Ritzel nach dem vorhergehenden Anspruch, **dadurch gekennzeichnet, dass** es sich um eine Mikrobearbeitung durch Laser handelt.

7. Mechanische Anordnung zum Übertragen einer Bewegung um eine Drehachse (Z), umfassend ein erstes mechanisches Element (1), ein zweites mechanisches Element (2), ein drittes (3) und ein viertes Element (4) nebeneinander, Das zweite und dritte Element (2, 3) werden durch das Spannmittel (5) zwischen das erste und das vierte Element (1, 4) geklemmt, so dass jedes Element immer ohne relative Rotationsbewegung zueinander um das ist 'Drehachse (Z), wobei jedes Element durch eine Kontaktfläche (1a, 2a, 2b, 3a, 3b, 4a) mit seinem Nachbarelement in Kontakt steht, **dadurch gekennzeichnet, dass** das zweite und das dritte Element (2, 3) jeweils ein Ritzel nach einem der Ansprüche 1 bis 6 sind.

8. Mechanische Anordnung nach dem vorhergehenden Anspruch, **dadurch gekennzeichnet, dass** das zweite und dritte mechanische Element (2, 3) so angeordnet sind, dass sie jeweils keine Einbaurichtung haben oder identisch sind.

9. Wärmekraftmaschine, **dadurch gekennzeichnet, dass** sie eine mechanische Baugruppe nach Anspruch 7 oder Anspruch 8 umfasst.

10. Wärmekraftmaschine nach Anspruch 9, **dadurch gekennzeichnet, dass** das erste Element eine Kurbelwelle ist.

11. Wärmekraftmaschine nach Anspruch 9 oder Anspruch 10, **dadurch gekennzeichnet, dass** das vierte Element eine Riemenscheibe ist.

12. Fahrzeug, **dadurch gekennzeichnet, dass** es eine Wärmekraftmaschine nach einem der Ansprüche 9 bis 11 umfasst.

## Claims

1. Pinion gear (2, 3) for transmitting movement about an axis of rotation (Z), delimited laterally by two faces, **characterized in that** each of the two faces comprises a bearing surface (2a, 2b, 3a, 3b), these support surfaces (2a, 2b, 3a, 3b) having a same pattern (9) in relief, the relief pattern (9) being such that the superimposing of this pattern (9) and its mirror image, regardless of the angular position of superposition of the mirror image relative to the pattern (9), gives only at an intersection point (10) or more.

2. Gear according to claim 1, **characterized in that** the pattern (9) is provided on the support surface at least ready of the edge (2') of the support surface furthest from the center of rotation radially (Z).

3. Gear according to claim 1 or claim 2, **characterized in that** the relief pattern (9) consists of the repetition of a unit cell (9').

4. Gear according to claim 3, **characterized in that** the unit cell (9') has an arc shape or a segment of a straight line whose extension does not pass through the axis of rotation (Z).

5. Gear according to any one of the preceding claims, **characterized in that** the relief pattern (9) is made by micro machining.

6. Gear according to the preceding claim, **characterized in that** it is a micro laser machining.

7. Mechanical transmission assembly for movement about an axis of rotation (Z), comprising a first mechanical (1) element, a second mechanical (2) element, a third (3) and a fourth member (4) juxtaposed, the second and third members (2, 3) being sandwiched between the first and fourth elements (1, 4) by clamping means (5) so that each element is still without relative rotational movement with respect to one another about the axis of rotation (Z), each element being in contact with its neighboring element through a contact surface (1 has, 2a, 2b, 3a, 3b, 4a), **characterized in that** the second and the third element (2, 3) are each a gear according to any of claims 1 to 6.

8. Mechanical assembly according to the preceding claim, **characterized in that** the second and third mechanical members (2, 3) are arranged so as to have only not each are the same or the assembly direction.

9. Internal combustion engine, **characterized in that** it comprises a mechanical assembly according to claim 7 or claim 8.

10. Internal combustion engine according to claim 9, **characterized in that** the first member is a crankshaft.

11. An internal combustion engine according to claim 9 or claim 10, **characterized in that** the fourth element is a pulley.

12. Vehicle, **characterized in that** it comprises an internal combustion engine according to any one of claims 9 to 11.
